# EUROPEAN PATENT SPECIFICATION

(11) **EP 2 873 144 B1**
(45) Date of publication and mention of the grant of the patent: **22.08.2018**
(21) Application number: 13739815.2
(22) Date of filing: 11.07.2013
(51) Int. Cl.: H02K 33/16, A61C 17/34, A61C 7/22, F16F 1/18, H02K 33/00, A61C 17/22

(54) **ORAL HYGIENE DEVICE WITH A RESONANT LINEAR MOTOR**
MUNDHYGIENEGERÄT MIT EINEM RESONANTEN LINEARMOTOR
DISPOSITIF D'HYGIÈNE BUCCALE COMPRENANT UN MOTEUR LINÉAIRE RÉSONANT

(30) Priority: 13.07.2012 EP 12176403
(43) Date of publication of application: 20.05.2015
(73) Proprietor: Braun GmbH, 61476 Kronberg (DE)
(72) Inventor: SCHOBER, Uwe, 61479 Glashütten (DE); ZIEGLER, Frank, 61184 Karben (DE); SCHAEFER, Robert, 60486 Frankfurt (DE)
(74) Representative: Schneider, Stefan Michael
(86) International application number: PCT/IB2013/055709
(87) International publication number: WO 2014/009916

(56) References cited:
- EP-A1- 1 193 844
- DE-A1-102006 061 381
- US-A1- 2006 066 154
- US-A1- 2011 214 239

## Description

### FIELD OF THE INVENTION

The present invention is concerned with an oral hygiene device having a resonant linear motor (i.e. a resonant spring-mass motor for providing a linear reciprocating or oscillating movement).

### BACKGROUND OF THE INVENTION

Resonant linear motors and electric toothbrushes having such a motor are known, where the resonant linear motor comprises a casing, an armature mounted at the casing for linear oscillation, a stator comprising a coil for driving the armature into oscillatory motion, and an amplitude control spindle, where the armature is at one end biased with a coil spring against the casing, the amplitude control spindle is biased at one end by a coil spring against the casing, and where the other end of the armature is biased by a coil spring against the other end of the amplitude control spindle. The amplitude control spindle is in particular used to absorb or increase an amplitude of the armature. Document US 2004/130221 A1 generally discusses such a motor.

It is an object of the present disclosure to provide an oral hygiene device such as an electric toothbrush having a resonant linear motor that is improved over the known oral hygiene devices having a resonant linear motor or at least provides an alternative design.

### SUMMARY OF THE INVENTION

In accordance with at least one aspect there is provided an oral hygiene device with a resonant linear motor for providing a linear oscillatory movement along a longitudinal direction that has a housing, a stator comprising a coil core and a stator coil wound around the coil core, which stator is fixedly mounted at or with respect to the housing, an armature comprising a permanent magnet arrangement, which armature is mounted for linear oscillatory movement along the longitudinal direction relative to the stator; and a drive shaft coupled with the armature, the drive shaft centrically extending along a longitudinal axis parallel to the longitudinal direction, wherein the armature has two opposite end sections that are disposed at the longitudinal axis and a central section carrying the permanent magnet arrangement, which central section is offset from the longitudinal axis.

### BRIEF DESCRIPTION OF THE DRAWINGS

The proposed resonant linear motor and electric device with such a resonant linear motor will be further elucidated by a detailed description of example embodiments and by reference to figures. In the figures
- Fig. 1: is a depiction of an example embodiment of a leaf spring as it may be used in a resonant linear motor as proposed;
- Fig. 2: is a longitudinal cut through an example embodiment of a resonant linear motor in accordance with the present disclosure;
- Fig. 3: is a cross sectional cut through the resonant linear motor shown in Fig. 3 along the plane indicated by line A-A;
- Fig. 4: is a graph indicating the maximum driving force F that may be provided by a resonant linear motor versus the peak amplitude A of the linear oscillation, where the curve referenced as M relates to a motor in accordance with the present description;
- Fig. 5: is a depiction of an example embodiment of an oral hygiene device that may comprise a resonant linear motor in accordance with the present disclosure.

### DETAILED DESCRIPTION OF THE INVENTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims. All publications and patents cited herein are incorporated herein by reference.

Although the embodiments are described herein in the context of an electric oral hygiene device, such as an electric toothbrush, embodiments are not limited thereto. Embodiments disclosed herein may be implemented in a wide-variety of applications, such as in the application of an electric tongue cleaner, an electric massage device and many others.

In some embodiments, a resonant linear motor in accordance with the present description has an armature mounted for driven linear oscillation essentially along a longitudinal direction and optionally a secondary mass mounted for linear oscillation essentially along the longitudinal direction. The secondary mass is functionally coupled with the armature (e.g. via mounting to a joint base such as a housing or a support structure) such that the vibrations generated by the armature excite the secondary mass into counter-oscillations cancelling the vibrations of the armature.

As is known in the art, such a resonant linear motor where a secondary mass is functionally coupled with a driven armature, the secondary mass can provide for an overall reduction of vibrations transmitted by the resonant linear motor to its housing. Additionally or alternatively, the vibrations transmitted from the secondary mass to the housing may cancel the vibrations transferred from the armature to the housing at least to a certain fraction and ideally completely. This effect can in particular be seen if the armature and the secondary mass move with opposite amplitude (i.e. with a phase shift of about 180 degrees). In some embodiments, the armature is mounted by at least a first and a second armature mounting spring assembly that each extend in a plane perpendicular to the longitudinal direction along which the armature is driven into a linear motion and additionally or alternatively, the secondary mass is mounted with at least a first and a second secondary mass mounting spring assembly each extending in a plane perpendicular to the longitudinal direction. At least the first and second armature spring assemblies have the same shape and orientation and are superimposed when seen in the longitudinal direction (i.e. are in alignment in longitudinal direction). Each of the spring assemblies of the resonant linear motor may comprise at least one flat leaf spring in accordance with the present disclosure or may have a stack of at least two such leaf springs.

In some embodiments, the mass of the armature and the mass of the secondary mass are chosen to be approximately identical, e.g. the two masses do not differ by more than 10%, optionally by not more than 5%, further optionally by not more than 2% and even further optionally, by not more than 1%. In some embodiments, the mass of the secondary mass and the mass of the armature are identical.

The particular design of the resonant linear motor as proposed herein sensibly uses the available construction volume of a resonant linear motor to provide maximum driving force. In particular in case that the armature is mounted by flat leaf spring assemblies that have the respective fastening section in a centre area, the centre section of the armature is retracted from the respective centre axis of the fastening locations to allow maximum construction volume for the stator that may be only arranged opposite to the armature. The back side of the centre section of the armature may then be as close as possible to a housing of, e.g. the resonant linear motor or of the oral hygiene device. As the end sections of the armature need to be fastened to the inner fastening section of the spring assemblies, intermediate sections connect the end parts with the retracted centre section. In contrast to the design usually chosen for a resonant linear motor providing an oscillating linear movement to be used in an oral hygiene device, where the stator coil and/or the coil core envelope around the armature, the present disclosure proposes to use a design where the armature and the stator are opposite to each other with only a small air gap between an end face of the permanent magnet arrangement and of the end face(s) of the stator leg(s). Such a design can leads to a higher driving force than the mentioned usual designs at same or even smaller construction volume as will be discussed further below with reference to some examples.

The term "spring assemblies" in the present disclosure is used to mean all spring assemblies of a resonant linear motor as proposed, i.e. this term may include at least a first armature mounting spring assembly or at least a first secondary mass mounting spring assembly. Each of the spring assemblies may be realized by at least one flat leaf spring in accordance with the present disclosure or by a stack of at least two of such flat leaf springs. The flat leaf springs are planar in a rest state (i.e. when they are not deformed) and thus extend in a plane (neglecting the thickness of the leaf spring or of the stack of leaf springs). The flat leaf springs have a spiral-like structure, i.e. the flat leaf spring comprises a spring arm that spirals from a centre area of the flat leaf spring to an outer area. In some embodiments, a radial beam in the plane of extension of the flat leaf spring originating from the centre of area of the flat leaf spring or from the center of area of an inner fastening section always crosses for all angles (i.e. 0 degrees to 360 degrees) the spring arm at least once. In accordance with at least one aspect of the present disclosure, all spring assemblies may have the same shape and may be arranged with identical orientation (i.e. they are all aligned with respect to the longitudinal direction or, in other words, superimposed when viewed along the longitudinal direction).

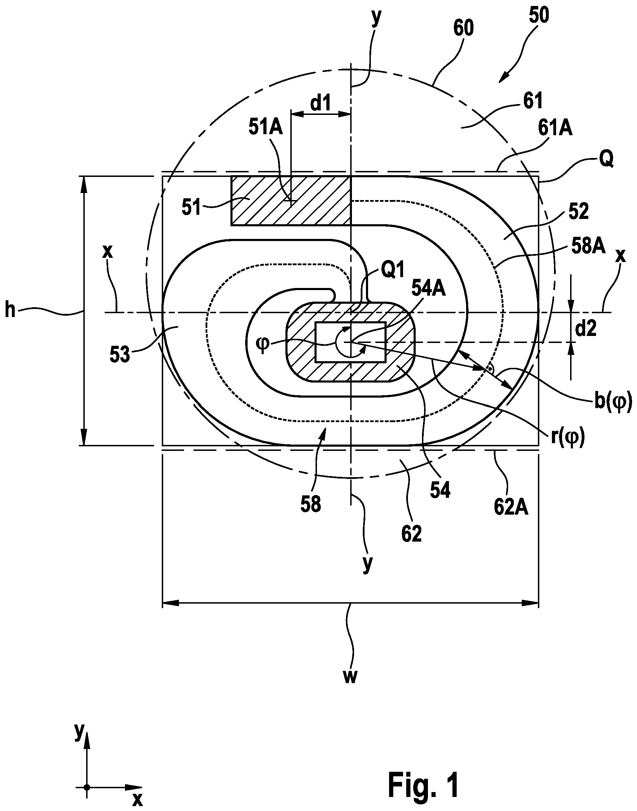

In accordance with at least one aspect of the present disclosure, the shape of the spring assemblies in at least a half of the leaf spring may be approximated by a circle from which a section is cut away, where the height of the section is at least about 10% of the diameter of the circle, optionally at least about 15% of the diameter, further optionally at least about 20% of the diameter, and even further optionally at least about 25% of the diameter, even though higher values are not excluded, e.g. at least 30%, at least 35% etc. As the shape of the spring assemblies may essentially define the cross sectional shape of the linear motor, such a shape provides additional construction volume in parallel to the resonant linear motor in case the resonant linear motor is disposed in a housing (of a handle section of an electric device) having an inner cavity that is essentially circular in cross section. Additional or alternative aspects of spring assemblies in accordance with the present disclosure are described in the following, in particular with reference to Fig. 1.

Fig. 1 is a depiction of an example embodiment of a flat leaf spring 50 that may be utilized in a resonant linear motor as proposed. Fig. 1 shows the general topology of the flat leaf spring 50 in its plane of extension spanned by axes *x* and *y.* The flat leaf spring 50 may have a, in particular homogeneous thickness in *z* direction (i.e. in a direction that is perpendicular to the paper plane in which the leaf spring 50 is depicted). The thickness may be in the range of between about 0.1 mm to about 1.0 mm, optionally a thickness in the range of between about 0.3 mm to about 0.5 mm may be chosen. In some embodiments, thicknesses of between 0.35mm to 0.4 mm may be used. Such flat leaf springs as shown may in particular be made from a sheet of stainless steel (in particular from a suitable spring steel), e.g. by stamping or laser cutting, even though other materials, in particular other metal sheet materials such as brass shall not be excluded and also other manufacturing techniques such as regular cutting shall also not be excluded.

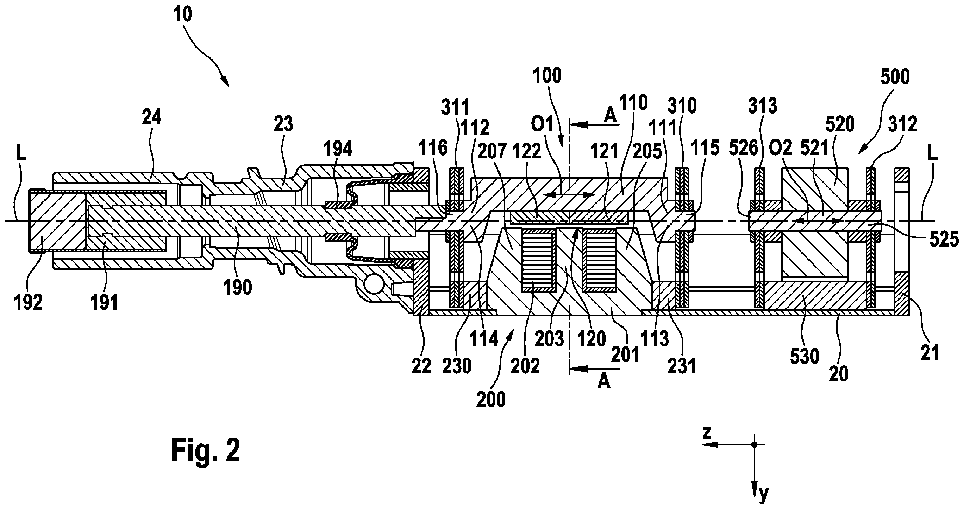

The flat leaf spring 50 has a generally spiral-like topology. The flat leaf spring 50 has at a top left position an outer fastening section 51, then a spiral-like spring arm 58 follows that is composed of a first spring arm section 52 and a second spring arm section 53. At the other end of the spiral-like spring arm 58 in a more central position close to a center area 59 of the leaf spring 50, the spring arm 58 is concluded by an inner fastening section 54. Due to the spiral-like topology, the outer fastening section 51 lies at the outside of the leaf spring and the inner fastening section 54 lies more centric within the leaf spring area. That means that the drive coupling axis (i.e. longitudinal axis L as indicated in Fig. 2) is forced to lie near the centre of the leaf spring area if the outer fastening section is used for fixation of the leaf spring 50 at a motor housing 20 (as shown in Fig. 2).

Generally, the flat leaf spring 50 consists of an inner fastening section 54, an outer fastening section 51, and a spring arm 58 that connects the inner and the outer fastening sections 54, 51 and spirals around a center of area 54A of the inner fastening section 54 along an angular range of at least 360 degrees. Generally, the flat leaf spring 50 is oblate in its plane of extension, i.e. a ratio of a width w of the flat leaf spring 50 and of a height h of the flat leaf spring is larger than 1.0, in particular this ratio is at least 1.33. As is shown in Fig. 1, the smallest possible rectangle Q that still fully envelopes the flat leaf spring 50 has a small side and a long side that coincide with the height and width of the flat leaf spring 50. A Cartesian coordinate system is defined with respect to this rectangle Q. The origin of the coordinate system is located in the center of area Q1 of the rectangle Q and the *x* axis then coincides with the long axis of the rectangle Q and the y axis coincides with the small axis of the rectangle Q. The width w of the flat leaf spring 50 is measured in *x* direction and the height of the flat leaf spring is measured in *y* direction.

The shown example embodiment of a flat leaf spring 50 has various features of a generally optional character that will be described in the following. For sake of clarity, a flat leaf spring for use in a resonant linear motor as proposed may have none of these further features, may have one, several or all of the described features.

The outer fastening section 51 may be used for fixation of the flat leaf spring with respect to a housing and the inner fastening section 54 may be used to couple to a movable part such as a motor armature as will be described further below.

Thus, the outer and inner fastening sections 51 and 54 are in a mounted state connected with parts that will move relative to each other. The outer and the inner fastening section may stay essentially flat when the spring is deformed, in particular if they are connected over their full area (shaded areas in Fig. 1) with, e.g., a housing part or an armature of a motor. While the outer fastening section 51 is shown to be closed area while the inner fastening section is shown to have a central bore, the design of the fastening sections is free to the skilled person and could be adapted to the design needs, e.g. also the outer fastening section could have a central bore and/or the inner fastening section 54 could be a closed area or one or both fastening sections could have two or even more bores.

The spring constant of the leaf spring 50 can be influenced and tuned by setting the dimensions of the flat spring leaf (i.e. its width in *x* direction, its height in y direction and its thickness in *z* direction) and generally its topology. Further, in order to set a particular spring constant, two or more flat leaf springs 50 may be stacked in *z* direction to form a leaf spring assembly, which leaf spring assembly then provides a spring constant that could otherwise only be provided by a much larger single leaf spring (larger in its width and height values, i.e. its *x* and *y* extensions, or by a much thicker leaf spring as the spring constant is generally proportional to the spring volume). As is obvious from the topology of the flat leaf spring 50 depicted in Fig. 1 and the previous description, the flat leaf spring 50 allows for a movement of the outer and inner fastening sections 51 and 54 relative to each other in *z* direction under a given spring constant *k_{z}* that acts to bring the leaf spring 50 back into a single extension plane (the rest state of the flat leaf spring). The spring constants *kₓ* and *k_{y}* acting in *x* and *y* direction, respectively, are much larger than the spring constant *k_{z}*. Thus, utilization of the flat leaf spring 50 or of stacked leaf spring assemblies of two or more flat leaf springs 50 in a resonant linear motor as shown in Fig. 2 lead not only to return forces acting in *z* direction against displacement of an armature or a secondary mass from their respective rest positions, but also allow for mounting of the armature and the secondary mass at a motor housing without any further bearings such as ball bearings or slide bearings as the flat leaf springs provide for stable support in *x* and *y* direction.

The center of area 51A of the outer fastening section 51 may be offset with respect to the *y* axis by a distance d1 (i.e. the location of the center of area 51A of the outer fastening section is then located at x = -d1 in the above defined Cartesian coordinate system), where in some embodiments, d1 may be in the range of between about 0.1 mm to 10 mm. Additionally or alternatively, the center of area 54A of the inner fastening area 54 may be offset with respect to the *x* axis by a distance d2 (i.e. the center of area 54A of the inner fastening section is then located at *x* = 0 and *y* = -d2), where in some embodiments, d2 may be in the range of between about 0.1 mm to 10 mm. These offsets d1, d2 of the first and/or the second fastening sections 51 and 54 may in particular be useful to increase the overall length and/or the angular length of the spiral-like spring arm 58 over designs where at least one of the outer and inner fastening sections is not offset and thus these offsets likely lead to changes, in particular an improvement of the spring characteristics of the leaf spring 50 for the intended use. In particular, the spring arm 58 can then extend over an angular range of at least about 360 degrees with respect to the center of area 54A of the inner fastening section 54.

The spiral-like spring arm 58 has in both, its first and second spring arm sections 52 and 53 varying arm widths b (where the arm width is measured in a direction perpendicular to a centre line 58A of the spring arm 58). As is indicated in Fig. 1, the arm width b(ϕ) may be determined as a function of the angular angle position ϕ, where ϕ = 0 degrees would be the start angle of the spring arm where it is connected with the inner fastening section 54. In the shown embodiment, the angular end value would be ϕ = 360 degrees where the spring arm 58 is connected with the outer fastening section 51. For illustrative purposes, a vector r(ϕ) is depicted in Fig. 1 for a given angular value ϕ, which vector originates in the center of area 54A of the inner fastening section 54 and extends up to the point where the vector r(ϕ) intersects the centre line 58A of the spring arm 58. The arm width b(ϕ) is then measured in a direction being perpendicular to the centre line 58A of the spring arm 58 as is indicted in Fig. 1.

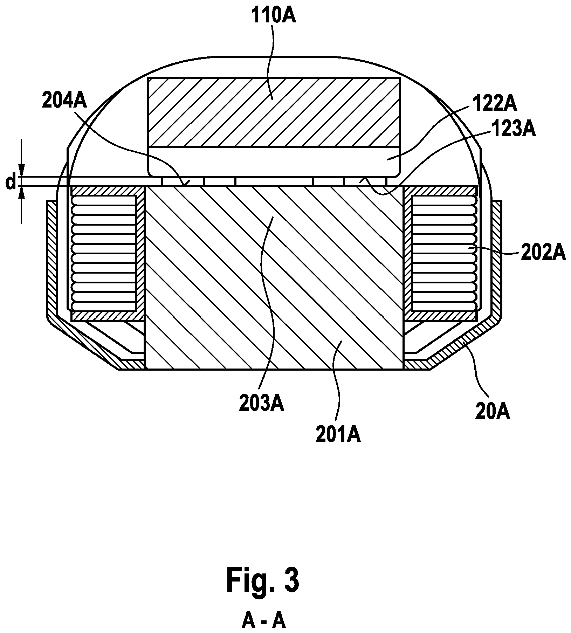

In the shown embodiment, the arm width b of the first spring arm section 52 increases from a start width value of the width close to the outer fastening section 51 to a centre width value more or less at its maximum extension in positive *x* direction that may be increased with respect to the start width value by 150% (i.e. by a factor of 1.5). The initial start width value may again about be reached where the first spring arm section 52 extends most in negative y direction, i.e. where the first spring arm section 52 merges into the second spring arm section 53. As is shown in Fig.1, the part of the spring arm 58 where the first and the second spring arm sections 52 and 53 merge may have a flat outer edge extending in x direction (i.e. this outer edge is parallel to the x axis) The maximum width value of the second spring arm section 53 may actually increase to a value of 200% (or more) of the start width value. This higher increase in arm width may be considered as a consequence of the higher curvature radius of the second spring arm section 53 which needs to spiral towards the center area of the flat leaf spring 50, whereas the first spring arm section 52 has a lower curvature radius. Further, the arm width of the second spring arm section 53 may become lower, e.g. by 25% of the start width value where the second arm section 53 merges into the inner fastening section 54. The exact design and topology may be found by numerical simulation for a given resonant linear motor design and the changes in the radial width of the spiral-like spring arm 58 may in particular be chosen to minimize stress in the leaf spring 50 during operation and thus the shown and discussed optimization features have a positive influence on the wear of the leaf spring 50. The values given here with respect to the example embodiment shown in Fig. 3 are exemplary only and any other values may as well be considered, depending on the particular shapes, dimensions, and materials and on the oscillation amplitudes the leaf springs have to withstand. Generally, the spring arm may have a radial width that behaves similar as the curvature radius of the central line of the spring arm, e.g. the radial width of the spring arm may increase proportional to the line curvature of the central line of the spring arm.

In order to illustrate a consequence of the oblate structure of the here generally discussed flat leaf spring, the following section takes a further approach to characterize the form and topology of the proposed flat leaf spring. At least one half of the leaf spring 50 may be approximated by a circle 60 drawn in the extension plane such that at least one section 61 of the circle can be cut away from the circle or such that two sections 61, 62 can be cut away from the circle by two parallel lines 61A, 62A (in the shown embodiment, these two parallel lines are parallel to the *x* axis) so that the remaining shape still envelopes the whole leaf spring. Here, "approximation by a circle" means that the smallest possible circle is chosen that still envelopes the whole flat leaf spring. The height of each of the cut-away sections of the circle in *y* direction (assuming that the cut lines 61A, 62A are parallel to the x axis) may be in a range of between about 1% to about 100% of the radius of the circle. While the cut-away sections may have equal or similar height in y direction, the cut-away height may in particular be chosen to be different, e.g. the relative cut away height for a leaf spring topology as shown in Fig. 3 may be 5% for the lower section (i.e. in the negative *y* range) and 30% for the upper section (i.e. in the positive *y* range). As the outer shape of the resonant linear motor housing can follow the shape of the leaf springs (which means that all the other parts shown in Fig. 2 also have to fit into this shape defined by the leaf springs), this may result in free construction space inside of a circularly shaped housing of an electric device in which the resonant linear motor will be realized. Thus, the flattened or oblate cross section of the resonant linear motor may leave construction space inside of the housing of the electric device that can be used for, e.g., accommodating a (optionally flexible) printed circuit board or other parts of the electric device. In other words, the flat leaf spring may fit into the smallest rectangle as described above, where the corners of the rectangle are rounded.

In some embodiments, the flat leaf spring is made from spring steel sheet material (material number 1.4310) and the thickness of the individual leaf springs may be between about 0.35 mm and about 0.4 mm.

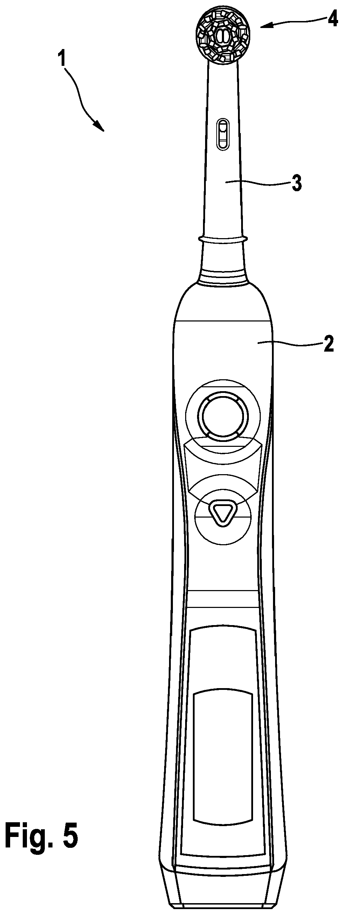

Fig. 2 is a longitudinal cut through an example embodiment of a resonant linear motor 10 in accordance with one or more aspects of the present disclosure, which resonant linear motor 10 here additionally comprises a drive shaft assembly arranged in a tubular motor housing extension 23. The resonant linear motor 10 can in particular be utilized in an oral hygiene device as shown in Fig. 5. The resonant linear motor 10 comprises an armature 100 mounted for linear oscillatory movement along a longitudinal direction (which is parallel to a longitudinal axis L) as indicated by double arrow O1 and a stator 200. Optionally the resonant linear motor can comprise a secondary mass unit 500 mounted for linear oscillation along the longitudinal direction as indicated by double arrow O2. In some embodiments with such a secondary mass unit, a coupling unit for directly mechanically coupling the armature 100 to the secondary mass unit 500 may be present (in the shown embodiment, the secondary mass unit is indirectly coupled to the armature, namely via a motor housing 20 providing a joint base). Such a coupling unit may comprise a coupling mass (which may in particular be chosen as having a low mass in comparison with the mass of the armature and/or the mass of the secondary mass unit, e.g. the mss of the coupling mass may be less than 10% of the mass of the armature 100), that may be coupled by a first and second coupling spring assembly (each of these coupling spring assemblies may comprise at least one flat leaf spring as proposed) to the armature on one end and to the secondary mass unit on the other end. The resonant linear motor 10 may have a motor housing 20 at which the stator 200 is mounted (while in other embodiments, the stator and/or the mounting springs may directly be mounted at a housing of an oral hygiene device).

A Cartesian coordinate system is indicated, where the *z* axis coincides (i.e. is parallel to) with the longitudinal axis L and the *y* axis is perpendicular to the *z* axis in the paper plane. The *x* axis extends into the paper depth.

The stator 200 comprises a coil core 201 that may be fixedly connected with the motor housing 20 and a stator coil 202 is wound around the coil core 201 (serving as back-iron). While in Fig. 2 an E-shaped (i.e. three-toothed) back iron is shown, this shall not exclude that other back-iron designs may be utilized, e.g. a U-shaped (i.e. two-toothed) back iron. The teeth of the coil core 201 have end surfaces that face a permanent magnet arrangement 120 mounted at a centre section 110 of the armature 100. The resonant linear motor 10 may comprise at least two electrical contacts for providing electric current to the stator coil 202 during operation. The coil core 201 may be made from a stack of isolated sheets such as ferromagnetic metal sheets ("soft iron", e.g. Fe-Si based metal) as is known in the art. In some example embodiments, the length of the end surface of the centre leg of an E-shaped coil core in *z*-direction may be about 3.0 mm and the respective length of the end surface of the other two legs may be about 2.0 mm.

The armature 100 may also (at least partly) be made from a stack of isolated sheets such as ferromagnetic metal sheets (e.g. Fe-Si based metal) that may be welded together as is known in the art. The armature 100 may be mounted to the housing 20 by means of a first and a second armature mounting spring assembly 310, 311 and the secondary mass unit 500 may be mounted to the motor housing 20 by means of a first and a second secondary mass mounting spring assembly 312, 313. The armature mounting spring assemblies 310 and 311 and/or the secondary mass mounting spring assemblies 312 and 313 may each in particular be realized as flat leaf springs that each extend in a rest state in a plane being perpendicular to the longitudinal axis L. The flat leaf springs may in particular each be realized as the generally proposed flat leaf spring discussed above with reference to Fig. 1, which has a spiral-like shape with an outer fastening section being arranged at the outside of the flat leaf spring and an inner fastening section being arranged more in a centre area of the flat leaf spring. Each of the mounting spring assemblies 310, 311, 312, 313 may be at one end (i.e. with the outer fastening section) fixedly connected at or with relation to the motor housing 20 and at another end (i.e. at the inner fastening section) fixedly connected with the armature 100 or the secondary mass unit 500, respectively. As shown in Fig. 2, each of the mounting spring assemblies 310, 311, 312, 313 may be mounted at the motor housing 20 by means of fastening elements 230, 231, or 530, which fastening elements may each be fixedly mounted at the motor housing 20 and may be fixedly mounted at the outer fastening section of the respective mounting spring assembly. Each of the mentioned spring assemblies 310, 311, 312, or 313 may be made from a single flat leaf spring or from a stack of (in particular identically shaped) flat leaf springs stacked in *z* direction. Each of the leaf springs may in particular have a certain thickness in *z* direction to achieve a target spring constant. The thickness and the number of the leaf springs may be set to tune the characteristics of the components of the resonant linear motor 10 such as the resonance and anti-resonance (or: cancellation) frequencies (the anti-resonance or cancellation frequency is the frequency at which the armature and the secondary mass do not only move with essentially opposed phase but also with essentially identical amplitude such that the vibrations transferred to the motor housing are presumably minimal). While a high spring constant could be achieved by a thick leaf spring instead of a stack of two thinner leaf springs, it has been found that a thicker leaf spring has a different deflection curve than a stack two thin leaf springs and that the latter has a better fatigue resistance and thus may improve the long life behavior of the overall motor design. The mounting spring assemblies may in particular be arranged such that they are aligned in longitudinal direction, i.e. such that the identically shaped flat leaf springs are superimposed over each other.

The armature 100 may have fastening protrusions 115 and 116 that extend in z direction and that are centrically disposed with respect to the longitudinal axis L. As shown in Fig. 2 for an example embodiment of a resonant linear motor in accordance with the present disclosure, the left-side (where left and right are used with respect to the paper plane on which the resonant linear motor is depicted) fastening protrusion 116 may be fixedly connected with the left-side armature mounting spring assembly 311. Further, the right-side fastening protrusion 115 may be fixedly connected with the right-side armature mounting spring assembly 310. Additionally, the left-side fastening protrusion 116 may establish a connection with a drive shaft 190 such that the linear oscillation of the armature 100 indicated by double arrow O1 is transferred during operation to the drive shaft 190 and from the drive shaft 190 to a functional element to be driven into motion (as explained with reference to Fig. 5). The drive shaft 190 may be centrically disposed with respect to the longitudinal axis L. The armature and the drive shaft may be connected by mechanical means (e.g. a snap-fit connection), by force fit element pushed together, or they may be connected by a separate process, e.g. a welding process.

Further, the secondary mass 520 may have fastening protrusions 525 and 526 that extend in z direction (i.e. in longitudinal extension direction) and that are centrically disposed along the longitudinal extension axis L. The right-side fastening protrusion 525 may be fixedly connected with the right-side secondary mass mounting spring assembly 312. Further, the left-side fastening protrusion 526 may be fixedly connected with the left-side secondary mass mounting spring assembly 313.

As will be explained in more detail below, the secondary mass unit 500 is utilized to be excited into a counter-oscillation with respect to the armature oscillation during operation. Thus, the vibrations transferred to the motor housing 20 (and thus eventually to a handle section of the electric device in which the resonant linear motor 10 may be mounted) will on the one hand be reduced over a design without a secondary mass unit 500 and the vibrations transferred to the housing will on the other hand at least partially cancel each other out due to the counter-phase oscillation of the secondary mass unit 500 with respect to the oscillation of the armature 100.

The armature 100 may comprise several sections, namely two end sections 113 and 114, one centre section 110 and two intermediate sections 111 and 112 that each connect one end of the centre section 110 with a respective end section 113 or 114, i.e. the right intermediate section 111 connects the right end of the centre section 110 with the right end section 113 and the left intermediate section 114 connects the left end of the centre section 110 with the left end section 114. While the end sections 113 and 114 are centrically disposed around the longitudinal axis L, which longitudinal axis L has a certain distance to the motor housing 20, the centre section 110 is offset with respect to the longitudinal axis. The central section 110 is disposed with only a small distance to the motor housing 20, i.e. the centre section 110 extends with a distance to the longitudinal axis L. Hence, the centre section 110 is retracted towards one side of the motor housing 20 so that more construction volume is made available between the centre section 110 and the opposite side of the motor housing 20. In contrast to other resonant linear motor designs known from electric toothbrushes where the stator is arranged in an enveloping manner around the armature, the here proposed particular design of the armature 100 allows arranging the stator 200 opposite to the centre section 110 of the armature 100 at the opposite side of the motor housing, while being able to provide a high driving force.

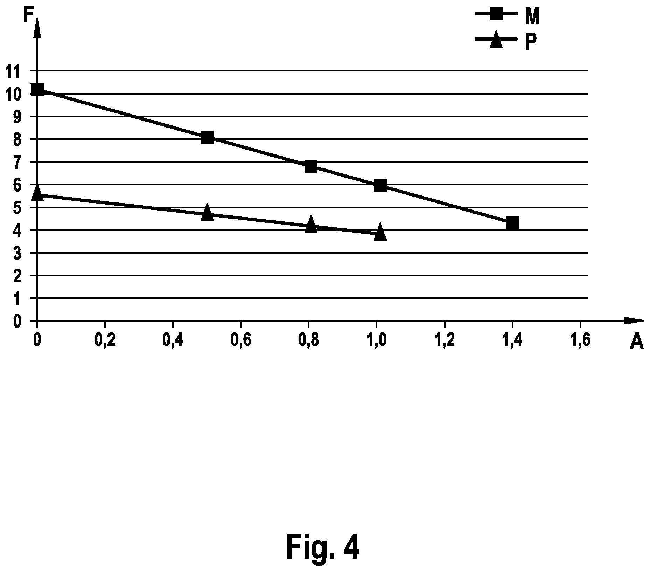

The permanent magnet assembly 120 mentioned before may be disposed on a side of the centre section 110 of the armature 100 that faces the end surfaces of the teeth of the coil core 201. The permanent magnet assembly 120 is here realized by two abutting permanent magnets 121 and 122 that are arranged side-by-side in *z* direction. In an example embodiment, the permanent magnets have a height in x-direction of 1.3 mm, a width in z-direction of 11.5 mm, and a length in y-direction of 6.0 mm. The permanent magnets may be made from (sintered) FeNdB (neodymium-iron-boron) material. In particular, an air gap between the end surfaces of the coil core 201 and the permanent magnet arrangement 120 may extend close to, in particular approximately centrically with respect to the longitudinal axis L, which design may lead to lower tilting forces during operation, which supports using the mounting spring assemblies also as bearings for the armature (in such embodiments, the armature is only borne by the armature mounting spring assemblies without any further bearings). This leads on one hand to a more simple motor design, hence to a relatively low cost realization of the linear motor, and on the other hand to a design option that allows higher forces to be provided by the resonant linear motor at a given construction volume (as will be discussed further below with reference to Fig. 4).

The two permanent magnets 121 and 122 are mounted at the central section 110 of the armature 100 such that end surfaces of the permanent magnets 121, 122 face end surfaces of three legs 203, 205, 207 of the E-shaped coil core 201. In a rest state, the end surface of the centre leg 203 of the coil core 201 is arranged centrically between the end faces of the two permanent magnets 121, 122. The armature 100 is coupled to a drive shaft 190, either directly (e.g.by a welded connection or a force-fit connection) or via a coupling adapter. The drive shaft 190 is centrically aligned with the longitudinal axis L, which longitudinal axis L is parallel to the longitudinal direction along which the linear oscillation of the armature 100 occurs. An air gap between the end surfaces of the permanent magnets 121, 122 and the end faces of the legs of the coil core is arranged to be close to the longitudinal axis L, in particular the centre line of the air gap may deviate from the longitudinal axis L by not more than about 2 mm, optionally by not more than 1 mm, further optionally by not more than 0.5 mm. In some embodiments, the offset between the center line of the air gap and the longitudinal axis L is less than 10% of the respective height value of the resonant linear motor, in particular less than 5% of the height value.

The stator 200 is fixedly connected with a motor housing 20. The motor housing 20 may comprise a bottom cap 21 and a top cap 22 for added stability of the motor housing 20. The drive shaft 190 may extend in a hollow of a generally tubular front housing 23 that ends in a connection section 24, which may comprise a connector structure suitable to establish an in particular mechanical connection with a respective connector structure at an attachment section. The drive shaft 190 may have at its free end (opposite to its end where it is coupled to the armature 100) a holder section 191 that may accommodate a magnetic coupling element 192 for establishing a magnetic connection with a respective magnetic coupling element of an attachment section such that the drive shaft 190 can transfer the linear oscillation provided by the armature 100 to a functional element mounted at the attachment section for driven movement. A bellows seal 194 may be arranged between the drive shaft 190 and the front housing 23 to seal the resonant linear motor against liquids and/or dust.

Fig. 3 is a cross-sectional cut through the resonant linear motor 10 shown in Fig. 2 along the plane that is indicated by line A-A in Fig. 2 with view direction towards the drive shaft. The cross sectional cut goes through the centre section 110 of the armature at which the second permanent magnet 122 is mounted, which second permanent magnet 122 has an end surface 123 that faces the end surface 204 of the centre leg 203 of the coil core 201. The end surface 204 of the centre leg 203 and the end surface 123 of the second permanent magnet 122 are arranged with an air gap between them, which air gap may have a width d that may be in a range of between about 0.1 mm to about 0.6 mm, optionally in a range of between about 0.2 mm to about 0.5 mm, and further optionally in a range of between about 0.25 mm to about 0.4 mm. The stator coil 202 is wound around the centre leg 203 of the coil core 201.

Fig. 3 shows that the particular opposite arrangement of the stator 200 and of the armature 100 allows for optimally using the width and height of the cross sectional shape of the resonant linear motor 10, which cross sectional shape is essentially defined by the shape of the flat leaf springs of the mounting spring assemblies, which mounting spring assemblies are here all having the same dimensions and are aligned. As a result of this arrangement, the resonant linear motor as proposed can provide a higher maximum driving force than other linear motors having the same construction dimensions and volume but where a different motor design such as a concentric arrangement of stator and armature is employed.

In the following, the operation of a resonant linear motor as proposed is described, where reference is made to the example embodiments shown in Fig. 2 and Fig. 3, which should not be interpreted as limiting. In operation, an alternating coil current is applied from an energy source via a motor control circuit to the stator coil 202. An alternating electromagnetic field develops around the stator 200 that interacts with the permanent magnet arrangement 120 of the armature 100 and leads to an alternating (i.e. oscillatory) linear movement of the armature 100. The alternating coil current provided to the stator coil 202 may have a frequency at or close to the anti-resonance (or: cancellation) frequency of the overall oscillating system. The respective anti-resonance frequency (or frequencies) may, e.g., be determined empirically or by means of numerical simulations. The resonant linear motor 10 may be designed in a way that a typical maximum amplitude value of the linear armature oscillation lying in a range of between about ±0.1 mm to about ±2.0 mm is achieved when providing a maximally available current. Optionally, this range may be chosen to be between ±0.5 mm to about ±1.5 mm, further optionally between ±0.8 mm to about ±1.2 mm. In some embodiments, the maximum amplitude value may be chosen to be about ±1.0 mm.

It is stated here that the use of leaf springs as shown in Fig. 1 essentially confine the possible movement of the armature 100 to an oscillatory linear movement in *z* direction. Nevertheless, the deformation a leaf springs 50 shown in Fig. 1 (or other spiral-like leaf springs) experiences during operation will inevitably lead to a slight side motion of the second fastening section 54. One may now arrange one of the armature mounting spring assemblies 310, 311 in a first orientation (e.g. the orientation as shown in Fig. 1), but the other armature mounting spring assembly in a mirrored (i.e. with respect to the y axis in Fig. 1) orientation to compensate the side motion. But such an arrangement would likely lead to a skewing of the armature 100 with respect to the *z* axis. In contrast, in case that the armature mounting spring assemblies 310 and 311 would be mounted with identical orientation, this would lead to an overall side motion of the armature 100, which is likely to be a better controllable movement (in terms of the overall design of the electric device in which the resonant linear motor shall be used) than any skewing movement.

The vibrations of the linearly driven armature 100 are transferred to the secondary mass unit 500, which is mounted by the secondary mass mounting spring assemblies 312 and 313 at the motor housing 20, via the motor housing 20 acting as a joint base. Assuming that the excitation frequency of the applied stator coil current is predetermined accordingly, a counter-phase oscillation of the secondary mass unit 500 can thereby become excited, which counter-phase oscillation is at least close to 180 degrees phase shifted to the oscillatory movement of the armature 100.

It is known to utilize linear motors in electric devices, e.g. oral hygiene devices such as the Oral-B™ Pulsonic, where the resonant linear motor drives a replacement brush head that is attached to a drive shaft providing linear oscillations having an oscillation amplitude of about ±0.5 mm into a respective linear oscillatory movement at a frequency of about 255 Hz. The resonant linear motor of the Oral-B™ Pulsonic has a volume of about 18.4 cm³ and can provide a maximum driving force during operation of about 4.5 Newton (N) and gets locked if a force of about 5.5 N is applied at the resonant linear motor (as will be seen below with reference to Fig. 4). In contrast, a resonant linear motor as proposed can be realized having a volume of about 14.8 cm³ (48.5 mm length, 21 mm width, and 14.5 mm height), which resonant linear motor can provide via its drive shaft a linear oscillation having an oscillation amplitude of about ±1.0 mm at a frequency of about 150 Hz and can provide a maximum driving force during operation of about 6.0 N and may get locked if a force of about 10.0 N is applied at the linear motor. The respective motor behavior is shown in Fig. 4, where the force (F) vs. amplitude (A) diagram can be seen for the two mentioned motors (where P indicates the Oral-B™ Pulsonic motor and M indicates the example embodiment of a proposed motor defined in this paragraph). The force F relates to the maximum current setting allowed for the respective motor. In Fig. 4 it can be seen that motor P provides a maximum force F of about 4.5 N at a peak amplitude value of about 0.5 mm and that motor M provides a maximum force of about 6 N at a peak amplitude of about 1.0 mm. With increasing applied force at the motor, the provided amplitude breaks down. For the previously known motor P, an applied force of 5.5 N will lead to a fully locked motor and no amplitude will be provided anymore. For the here discussed and proposed motor M, the motor would become locked at an applied force of 10 N. Thus, motor M can not only be used to drive a replacement brush head into linear oscillatory movement but also to drive a functional element mounted at the housing of a replacement brush into a movement different to a linear oscillatory motion, i.e. a motion that requires a gear unit and thus needs to overcame additional load. One aspect enabling the high force of the proposed resonant linear motor in comparison to a known motor having similar or even higher volume is the particular motor design discussed with reference to Fig. 2 with use of flat leaf springs as shown and discussed with reference to Fig. 1. This allows making a resonant linear motor with a low volume that provides a high force.

Tests had been performed with an electric toothbrush as electric device utilizing a resonant linear motor as proposed that is disposed in a handle section and an attachment section having as functional element a known replacement brush head (e.g. Oral-B™ Precision Clean) mounted for oscillatory rotation around an axis that is perpendicular to the longitudinal axis along which the resonant linear motor vibrates. Firstly, it had been found that a resonant linear motor providing a linear oscillatory movement having an amplitude of about ±1.0 mm around a rest position can drive the brush head into an oscillatory rotation having an angular amplitude of about ±20 degrees around a rest position, which ±20 degrees represents the angular amplitude provided by current electric toothbrushes such as the Oral-B™ Professional 5000 being equipped with an Oral-B™ Precision Clean. The angular amplitude of ±20 degrees was identified by sensory tests as a value that was preferred by at least a subgroup of test candidates also for the higher frequency of about 150 Hz against a frequency of about 75-85 Hz. Secondly, it had been found that a maximum driving force of 6 N at a peak amplitude value of ±1.0 mm is required to provide a good cleaning result for such an electric toothbrush. At a lower driving force, the angular peak amplitude breaks down from ±20 degrees too fast under regular cleaning conditions.

Fig. 5 shows an example embodiment of an electric oral hygiene device 1 in accordance with the present disclosure, here realized as an electric toothbrush, which oral hygiene device 1 comprises a resonant linear motor in accordance with the present disclosure. The oral hygiene device 1 may comprise a handle section 2 and a, in particular detachable attachment section 3 that is shown in an attached state, i.e. in a state where the attachment section 3 is attached to the handle section 2. The attachment section 3 may comprise a first connector structure and the handle section 2 may comprise a second connector structure enabling a, in particular detachable connection between attachment section 3 and handle section 2, e.g. the attachment section 3 may comprise one or two flexible snap hooks and the handle section 2 may comprise one or two respective depressions into which snap noses of the snap hooks can engage. The attachment section 3 may in particular comprise a functional element 4, here realized as a brush head, which brush head may be mounted for driven movement. As has been explained, the resonant linear motor is disposed in the handle section 2 and is coupled with a drive shaft that may be functionally coupled with the functional element 4 in the attached state so that the drive shaft transfers motion provided by the resonant linear motor during operation to the functional element 4. E.g. the resonant linear motor may provide a linear oscillatory motion via the drive shaft, which linear oscillation is transferred to the functional head 4 and may be converted by a respective gear unit into an oscillatory rotation of the functional element 4 around a rotation axis that may in particular be essentially perpendicular to a longitudinal axis along which the drive shaft vibrates. Of course, other movements of a functional element may be contemplated, e.g. an oscillatory wiping motion around an axis that is essentially parallel to the longitudinal axis, a rotation or oscillatory rotation around a rotation axis that is angled with respect to the longitudinal axis etc. Instead of being realized as an electric toothbrush, the oral hygiene device 1 may be realized, e.g., as another oral hygiene device such as an electric flossing device, an electric tongue scraper, an electric interdental cleaner, an electric tooth stick or as an electric skin treatment device such as an electric massage device or an electric exfoliation brush etc.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An oral hygiene device with a resonant linear motor (10) for providing a linear oscillatory movement along a longitudinal direction comprising:
a housing (20);
a stator (200) comprising a coil core (201) and a stator coil (202) wound around the coil core, (201) which stator (200) is fixedly mounted at or with respect to the housing (20);
an armature (100) comprising a permanent magnet arrangement (120), which armature (100) is mounted for linear oscillatory movement along the longitudinal direction relative to the stator (200); and
a drive shaft (190) coupled with the armature (100), the drive shaft (190) centrically extending along a longitudinal axis (L) parallel to the longitudinal direction;
wherein the armature (100) has two opposite end sections (113, 114) that are disposed at the longitudinal axis (L) and a central section (110) carrying the permanent magnet arrangement (120), **characterized in that** the central section (110) is offset from the longitudinal axis (L).

2. The oral hygiene device in accordance with claim 1, wherein the stator (200) has at least one stator leg (203, 205, 207) having an end face arranged to face an end surface of the permanent magnet arrangement (120), optionally wherein the stator (200) has two or three legs (203, 205, 207) having end surfaces arranged to face the end surface of the permanent magnet arrangement (120).

3. The oral hygiene device in accordance with claim 2, wherein an air gap extends between the end surface of the stator leg (203, 205, 207) and the end surface of the permanent magnet arrangement (120), which air gap is arranged close to the longitudinal axis (L), in particular where a distance between the centre line of the air gap and the longitudinal axis (L) is below 2.0 mm, optionally below 1.0 mm, further optionally below 0.5 mm.

4. The oral hygiene device in accordance with the previous claim, wherein the minimal height of the air gap measured between the end surface of the stator leg (203, 205, 207) and the end surface of the permanent magnet arrangement (120) in a direction perpendicular to the longitudinal direction is in a range of between about 0.1 mm and about 0.6 mm.

5. The oral hygiene device in accordance with any one of claims 1 to 4, wherein the stator (200) is arranged only opposite to the permanent magnet arrangement (120).

6. The oral hygiene device in accordance with any one of claims 1 to 5, wherein the armature (100) is mounted via first and second armature mounting spring assemblies (310, 311), where each of the armature mounting spring assemblies (310, 311) comprises at least one flat leaf spring (50).

7. The oral hygiene device in accordance with any one of claims 1 to 6, wherein the armature (100) is only borne by the armature mounting spring assemblies (310, 311).

8. The oral hygiene device in accordance with any one of claims 1 to 7, wherein the first and the second armature mounting spring assemblies (310, 311) are each arranged to extend in a plane perpendicular to the longitudinal direction and the armature (100) and the stator (200) are shaped such that they essentially fit into an area defined by the first and second mounting spring assemblies (310, 311) when viewed along the longitudinal direction.

9. The oral hygiene device in accordance with the previous claim, wherein the superimposed shape of the parts of the linear resonant motor (10) when viewed along the longitudinal direction is oblate, in particular wherein a ratio between a width and a height of the shape is at least 1.33.

10. The oral hygiene device in accordance with any one of claims 1 to 9, wherein the resonant linear motor (10) further comprises a secondary mass unit (500) mounted for linear oscillation along the longitudinal direction.

11. The oral hygiene device in accordance with the previous claim, wherein the secondary mass unit (500) is mounted at or with respect to the housing via first and second secondary mass mounting spring assemblies (312, 313), where each of the secondary mass mounting spring assemblies comprises at least one flat leaf spring (50).

12. The oral hygiene device in accordance with any one of claims 1 to 11, wherein the resonant linear motor (10) is arranged to drive the armature (100) into a linear oscillatory movement with a peak amplitude value of about ±1.0 mm.

13. The oral hygiene device in accordance with any one of claims 1 to 12, wherein the resonant linear motor (10) is arranged to drive the armature (100) at a frequency of about 150 Hz and to provide a maximum driving force during operation of about 6.0 N.

14. The oral hygiene device in accordance with any one of claims 6 to 13, wherein each of the flat leaf springs (50) consist of an inner fastening section (54), an outer fastening section (51), and a spring arm (58) connecting the inner fastening section (54) and the outer fastening section (58), in particular wherein the flat leaf spring (50) is made from a single sheet such that the inner fastening section (54), the spring arm (58), and the outer fastening section (58) are integral with each other, wherein the spring arm (58) spirals around the center of area of the inner fastening section (54) and the flat leaf spring (50) is oblate in its plane of extension such that a ratio between a width of the leaf spring (50) and a height of the flat leaf spring (50) has a value of at least about 1.33, the direction in which the height is measured being perpendicular to the direction in which the width is measured.

15. The oral hygiene device in accordance the previous claim, wherein the inner fastening sections (54) of the first and second armature mounting spring assemblies (310, 311) are each fixedly connected with a respective fastening protrusion (115, 116) of the armature (100) and the outer fastening sections (58) are fixedly connected at or with respect to the housing (20).

## Patentansprüche

1. Mundhygienevorrichtung mit einem resonanten Linearmotor (10) zum Bereitstellen einer linearen Oszillationsbewegung entlang einer Längsrichtung, umfassend:
ein Gehäuse (20);
einen Stator (200), der einen Spulenkern (201) und eine um den Spulenkern (201) gewickelte Statorspule (202) umfasst, wobei der Stator (200) an dem oder in Bezug auf das Gehäuse (20) fest befestigt ist;
eine Armatur (100), die eine Permanentmagnetanordnung (120) umfasst, wobei die Armatur (100) für die lineare Oszillationsbewegung entlang der Längsrichtung relativ zum Stator (200) befestigt ist; und
eine Antriebswelle (190), die mit der Armatur (100) gekoppelt ist, wobei die Antriebswelle (190) zentrisch entlang einer Längsachse (L) parallel zur Längsrichtung verläuft;
wobei die Armatur (100) zwei entgegengesetzte Endabschnitte (113, 114) aufweist, die an der Längsachse (L) und einem die Permanentmagnetanordnung (120) tragenden zentralen Abschnitt (110) angebracht sind, **dadurch gekennzeichnet, dass** der zentrale Abschnitt (110) von der Längsachse (L) versetzt angeordnet ist.

2. Mundhygienevorrichtung nach Anspruch 1, wobei der Stator (200) mindestens ein Statorbein (203, 205, 207) mit einer Stirnseite aufweist, die so angeordnet ist, dass sie einer Endfläche der Permanentmagnetanordnung (120) zugewandt ist, wobei optional der Stator (200) zwei oder drei Beine (203, 205, 207) mit Endflächen aufweist, die so angeordnet sind, dass sie der Endfläche der Permanentmagnetanordnung (120) zugewandt sind.

3. Mundhygienevorrichtung nach Anspruch 2, wobei ein Luftspalt zwischen der Endfläche des Statorbeins (203, 205, 207) und der Endfläche der Permanentmagnetanordnung (120) verläuft, wobei der Luftspalt nahe der Längsachse (L) angeordnet ist, wobei insbesondere ein Abstand zwischen der Mittellinie des Luftspalts und der Längsachse (L) weniger als 2,0 mm, optional weniger als 1,0 mm, ferner optional weniger als 0,5 mm beträgt.

4. Mundhygienevorrichtung nach dem vorstehenden Anspruch, wobei die zwischen der Endfläche des Statorbeins (203, 205, 207) und der Endfläche der Permanentmagnetanordnung (120) in einer Richtung lotrecht zur Längsrichtung gemessene Mindesthöhe des Luftspalts in einem Bereich zwischen etwa 0,1 mm und etwa 0,6 mm liegt.

5. Mundhygienevorrichtung nach einem der Ansprüche 1 bis 4, wobei der Stator (200) nur gegenüber der Permanentmagnetanordnung (120) angeordnet ist.

6. Mundhygienevorrichtung nach einem der Ansprüche 1 bis 5, wobei die Armatur (100) über erste und zweite Armaturbefestigungsfedervorrichtungen (310, 311) befestigt ist, wobei jede der Armaturbefestigungsfedervorrichtungen (310, 311) mindestens eine flache Blattfeder (50) umfasst.

7. Mundhygienevorrichtung nach einem der Ansprüche 1 bis 6, wobei die Armatur (100) nur von den Armaturbefestigungsfedervorrichtungen (310, 311) getragen wird.

8. Mundhygienevorrichtungen nach einem der Ansprüche 1 bis 7, wobei die ersten und zweiten Armaturbefestigungsfedervorrichtungen (310, 311) jeweils so angeordnet sind, dass sie in einer Ebene lotrecht zur Längsrichtung verlaufen und die Armatur (100) und der Stator (200) so geformt sind, dass sie bei Betrachtung entlang der Längsrichtung im Wesentlichen in einen durch die ersten und zweiten Armaturbefestigungsfedervorrichtungen (310, 311) definierten Bereich passen.

9. Mundhygienevorrichtung nach dem vorstehenden Anspruch, wobei die übereinander liegende Form der Teile des linearen Resonanzmotors (10) bei Betrachtung entlang der Längsrichtung abgeflacht ist, wobei insbesondere ein Verhältnis zwischen einer Breite und einer Höhe der Form mindestens 1,33 beträgt.

10. Mundhygienevorrichtung nach einem der Ansprüche 1 bis 9, wobei der resonante Linearmotor (10) ferner eine Sekundärmasseneinheit (500) umfasst, die zur linearen Oszillation entlang der Längsrichtung befestigt ist.

11. Mundhygienevorrichtung nach dem vorstehenden Anspruch, wobei die Sekundärmasseneinheit (500) über erste und zweite Armaturbefestigungsfedervorrichtungen (312, 313) an dem oder in Bezug auf das Gehäuse befestigt ist, wobei jede der Sekundärmassenbefestigungsfedervorrichtungen mindestens eine flache Blattfeder (50) umfasst.

12. Mundhygienevorrichtung nach einem der Ansprüche 1 bis 11, wobei der resonante Linearmotor (10) so angeordnet ist, dass die Armatur (100) in einer linearen Oszillationsbewegung mit einem Spitzenamplitudenwert von etwa ±1,0 mm angetrieben wird.

13. Mundhygienevorrichtung nach einem der Ansprüche 1 bis 12, wobei der resonante Linearmotor (10) so angeordnet ist, dass er die Armatur (100) mit einer Frequenz von etwa 150 Hz antreibt und während des Betriebs eine maximale Antriebskraft von etwa 6,0 N bereitstellt.

14. Mundhygienevorrichtung nach einem der Ansprüche 6 bis 13, wobei jede der flachen Blattfedern (50) aus einem inneren Befestigungsabschnitt (54), einem äußeren Befestigungsabschnitt (51) und einem Federarm (58) besteht, die den inneren Befestigungsabschnitt (54) und den äußeren Befestigungsabschnitt (58) verbinden, wobei insbesondere die flache Blattfeder (50) aus einem einzelnen Blatt hergestellt ist, sodass der innere Befestigungsabschnitt (54), der Federarm (58) und der äußere Befestigungsabschnitt (58) integral miteinander ausgebildet sind, wobei sich der Federarm (58) um das Zentrum des Bereichs des inneren Befestigungsabschnitts (54) windet und die flache Blattfeder (50) in ihrer Verlaufsebene abgeflacht ist, so dass ein Verhältnis zwischen einer Breite der Blattfeder (50) und einer Höhe der flachen Blattfeder (50) einen Wert von mindestens etwa 1,33 aufweist, wobei die Richtung, in der die Höhe gemessen wird, lotrecht zu der Richtung, in der die Breite gemessen wird, verläuft.

15. Mundhygienevorrichtung nach dem vorstehenden Anspruch, wobei die inneren Befestigungsabschnitte (54) der ersten und zweiten Armaturbefestigungsfedervorrichtungen (310, 311) jeweils fest mit einem entsprechenden Befestigungsvorsprung (115, 116) der Armatur (100) verbunden sind und die äußeren Befestigungsabschnitte (58) fest mit dem oder in Bezug auf das Gehäuse (20) verbunden sind.

## Revendications

1. Dispositif d'hygiène bucco-dentaire avec un moteur linéaire résonant (10) pour fournir un mouvement oscillatoire linéaire le long d'une direction longitudinale, comprenant :
un logement (20) ;
un stator (200) comprenant un noyau de bobine (201) et une bobine de stator (202) enroulée autour du noyau de bobine (201), lequel stator (200) est monté fixement au niveau du, ou par rapport au, logement (20) ;
un induit (100) comprenant un ordonnancement d'aimant permanent (120), lequel induit (100) est monté pour un mouvement oscillatoire linéaire le long de la direction longitudinale par rapport au stator (200) ; et
un arbre d'entraînement (190) couplé à l'induit (100), l'arbre d'entraînement (190) s'étendant de façon centrale le long d'un axe longitudinal (L) parallèle à la direction longitudinale ;
dans lequel l'induit (100) a deux sections d'extrémités opposées (113, 114) qui sont disposées au niveau de l'axe longitudinal (L) et une section centrale (110) portant l'ordonnancement d'aimant permanent (120), **caractérisé en ce que** la section centrale (110) est décalée de l'axe longitudinal (L).

2. Dispositif d'hygiène bucco-dentaire selon la revendication 1, dans lequel le stator (200) a au moins une patte de stator (203, 205, 207) ayant une face d'extrémité disposée pour faire face à une surface d'extrémité de l'ordonnancement d'aimant permanent (120), éventuellement dans lequel le stator (200) a deux ou trois pattes (203, 205, 207) ayant des surfaces d'extrémité disposées pour faire face à la surface d'extrémité de l'ordonnancement d'aimant permanent (120).

3. Dispositif d'hygiène bucco-dentaire selon la revendication 2, dans lequel un entrefer s'étend entre la surface d'extrémité de la patte de stator (203, 205, 207) et la surface d'extrémité de l'ordonnancement d'aimant permanent (120), lequel entrefer est disposé près de l'axe longitudinal (L), en particulier où une distance entre la ligne centrale de l'entrefer et l'axe longitudinal (L) est inférieure à 2,0 mm, éventuellement inférieure à 1,0 mm, éventuellement en outre inférieure à 0,5 mm.

4. Dispositif d'hygiène bucco-dentaire selon la revendication précédente, dans lequel la hauteur minimale de l'entrefer mesurée entre la surface d'extrémité de la patte de stator (203, 205, 207) et la surface d'extrémité de l'ordonnancement d'aimant permanent (120) dans une direction perpendiculaire à la direction longitudinale est dans une plage comprise entre environ 0,1 mm et environ 0,6 mm.

5. Dispositif d'hygiène bucco-dentaire selon l'une quelconque des revendications 1 à 4, dans lequel le stator (200) est disposé uniquement opposé à l'ordonnancement d'aimant permanent (120).

6. Dispositif d'hygiène bucco-dentaire selon l'une quelconque des revendications 1 à 5, dans lequel l'induit (100) est monté par l'intermédiaire de premier et deuxième ensembles ressort de montage d'induit (310, 311), où chacun des ensembles ressort de montage d'induit (310, 311) comprend au moins un ressort à lame plat (50).

7. Dispositif d'hygiène bucco-dentaire selon l'une quelconque des revendications 1 à 6, dans lequel l'induit (100) est seulement pris en charge par les ensembles ressort de montage d'induit (310, 311).

8. Dispositif d'hygiène bucco-dentaire selon l'une quelconque des revendications 1 à 7, dans lequel les premier et deuxième ensembles ressort de montage d'induit (310, 311) sont chacun disposés pour s'étendre dans un plan perpendiculaire à la direction longitudinale et l'induit (100) et le stator (200) sont profilés de telle sorte qu'ils s'ajustent sensiblement dans une zone définie par les premier et deuxième ensembles ressort de montage (310, 311) lorsqu'on observe le long de la direction longitudinale.

9. Dispositif d'hygiène bucco-dentaire selon la revendication précédente, dans lequel la forme superposée des parties du moteur résonant linéaire (10) lorsqu'on observe le long de la direction longitudinale est aplatie, en particulier dans lequel un rapport entre une largeur et une taille de la forme vaut au moins 1,33.

10. Dispositif d'hygiène bucco-dentaire selon l'une quelconque des revendications 1 à 9, dans lequel le moteur linéaire résonant (10) comprend en outre une unité de masse secondaire (500) montée pour oscillation linéaire le long de la direction longitudinale.

11. Dispositif d'hygiène bucco-dentaire selon la revendication précédente, dans lequel l'unité de masse secondaire (500) est montée au niveau du, ou par rapport au, logement par l'intermédiaire de premier et deuxième ensembles ressort de montage de masse secondaire (312, 313), où chacun des ensembles ressort de montage de masse secondaire comprend au moins un ressort à lame plat (50).

12. Dispositif d'hygiène bucco-dentaire selon l'une quelconque des revendications 1 à 11, dans lequel le moteur linéaire résonant (10) est disposé pour entraîner l'induit (100) dans un mouvement oscillatoire linéaire avec une valeur d'amplitude maximale d'environ ±1,0 mm.

13. Dispositif d'hygiène bucco-dentaire selon l'une quelconque des revendications 1 à 12, dans lequel le moteur linéaire résonant (10) est disposé pour entraîner l'induit (100) à une fréquence d'environ 150 Hz et pour fournir une force maximale d'entraînement pendant le fonctionnement d'environ 6,0 N.

14. Dispositif d'hygiène bucco-dentaire selon l'une quelconque des revendications 6 à 13, dans lequel chacun des ressorts à lame plats (50) est constitué d'une section de fixation interne (54), d'une section de fixation externe (51) et d'un bras de ressort (58) reliant la section de fixation interne (54) et la section de fixation externe (58), en particulier dans lequel le ressort à lame plat (50) est fabriqué à partir d'une feuille unique de telle sorte que la section de fixation interne (54), le bras de ressort (58) et la section de fixation externe (58) sont solidaires les uns par rapport aux autres, dans lequel le bras de ressort (58) décrit une spirale autour du centre de zone de la section de fixation interne (54) et le ressort à lame plat (50) est aplati dans son plan d'extension de telle sorte qu'un rapport entre une largeur du ressort à lame (50) et une taille du ressort à lame plat (50) a une valeur d'au moins environ 1,33, la direction dans laquelle la taille est mesurée étant perpendiculaire à la direction dans laquelle la largeur est mesurée.

15. Dispositif d'hygiène bucco-dentaire selon la revendication précédente, dans lequel les sections de fixation internes (54) des premier et deuxième ensembles ressort de montage d'induit (310, 311) sont chacune reliées fixement à une partie saillante de fixation respective (115, 116) de l'induit (100) et les sections de fixation externes (58) sont reliées fixement au niveau du, ou par rapport au, logement (20).
